# EUROPEAN PATENT APPLICATION

(11) **EP 4 083 128 A1**
(43) Date of publication of application: **02.11.2022**
(21) Application number: 20904818.0
(22) Date of filing: 07.12.2020
(51) Int. Cl.: C08K 5/07, C08L 101/00, H01G 4/32

(54) **INSULATING RESIN**

(30) Priority: 25.12.2019 JP 2019235160
(71) Applicant: Kyocera Corporation, Kyoto-shi Kyoto 612-8501 (JP); SHINSHU UNIVERSITY, Matsumoto City, Nagano, 390-8621 (JP)
(72) Inventor: ETOU, Kazuya, Kyoto-shi, Kyoto 612-8501 (JP); TANIGAWA, Kotaro, Kyoto-shi, Kyoto 612-8501 (JP); MURAKAMI, Yasushi, Ueda City, Nagano 3868567 (JP)
(74) Representative: Viering, Jentschura & Partner mbB Patent- und Rechtsanwälte
(86) International application number: PCT/JP2020/045550
(87) International publication number: WO 2021/131654

(57) **Abstract**

An insulating resin includes (A) a thermoplastic resin and (B) a metal diketone complex.

## Description

### FIELD

The present disclosure relates to an insulating resin.

### BACKGROUND

A known technique is described in, for example, Patent Literature 1.

### CITATION LIST

### PATENT LITERATURE

Patent Literature 1: Japanese Unexamined Patent Application Publication No. 2006-225484

### BRIEF SUMMARY

An insulating resin according to an aspect of the present disclosure includes (A) a thermoplastic resin and (B) a metal diketone complex.

### BRIEF DESCRIPTION OF DRAWINGS

The objects, features, and advantages of the present disclosure will become more apparent from the following detailed description and the drawings.

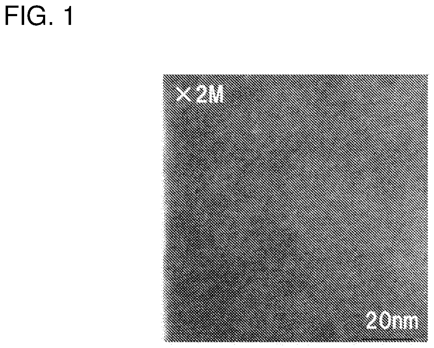

FIG. 1 is a scanning transmission electron microscope (STEM) photograph of a dielectric film for a film capacitor according to an embodiment.

### DETAILED DESCRIPTION

An insulating resin with the structure that forms the basis of an insulating resin according to one or more embodiments of the present disclosure is used in electronic components to electrically insulate, for example, wires and terminals from each other. The insulating material is also used as a dielectric material. Examples of the insulating material include ceramic materials such as metal oxides and metal nitrides or resin materials such as a polyethylene resin and a polyimide resin. A resin material, which can be shaped thin, lightweight, easy to process, and cost-effective, is used as the insulating material.

As electronic devices are miniaturized and more sophisticated, electronic components are used in higher temperature environments. These electronic components are to be heat-resistant to achieve stable electrical characteristics over a long time in high-temperature environments.

One example electronic component is a film capacitor. Film capacitors include resin films as an insulating or dielectric material. Film capacitors may be miniaturized by reducing the thickness of a dielectric film, using fewer stacked dielectric films, or using fewer windings of dielectric films. Dielectric films to be thinner are to have an increased withstand voltage. For example, a dielectric film described in Patent Literature 1 is formed from a composite dielectric material including ceramic particles dispersed in an organic resin with epoxy groups to increase the withstand voltage.

Electronic components with further higher capabilities are to include an insulating resin having more improved characteristics than the insulating resin that forms the basis of the insulating resin according to one or more embodiments of the present disclosure.

One or more aspects of the present disclosure are directed to an insulating resin with an improved characteristic.

The insulating resin according to the present embodiment includes (A) a thermoplastic resin and (B) a metal diketone complex.

The metal diketone complex is a complex including one or more diketones coordinating to the central metal. The metal diketone complex allows its central metallic element to be dispersed in the thermoplastic resin at the monomolecular level. The metal diketone complex dispersed in the thermoplastic resin does not react or bond with the thermoplastic resin, remaining as a complex or being dispersed at least in the form of the diketone and the metallic element. In the cross section of the insulating resin formed in a film observed with a scanning transmission electron microscope (STEM), the dispersed metallic element is visually less than or equal to 1 nm in diameter, as shown in FIG. 1. The unreacted state of the metal diketone complex with a thermoplastic resin, or for example, the absence of ester and ether bonds between the thermoplastic resin and acetylacetonate, is determined by nuclear magnetic resonance spectroscopy (NMR).

One common cause of resin degradation, or a lower withstand voltage as a characteristic of an insulating resin, is the cleavage of intramolecular bonds due to oxygen. As described above, the insulating resin according to the present embodiment has the metallic element dispersed in the thermoplastic resin at the monomolecular level. Oxygen, which reacts with a metal complex to form a metal oxide, is trapped by the metallic element in the thermoplastic resin. This reduces the degradation of the thermoplastic resin characteristic. In particular, the metallic element is dispersed in the thermoplastic resin as a metal diketone complex at the monomolecular level. This increases the metal element content per unit volume of the insulating resin, or more specifically, increases the amount of oxygen being trapped. This increases the withstand voltage of the insulating resin.

### (A) Thermoplastic Resin

The thermoplastic resin includes, for example, at least one selected from the group consisting of a polycarbonate resin, a polyester resin, a polyarylate resin, a cyclic olefinic resin, a polyphenylene ether resin, a polyphenylene sulfide resin, and a polyetherimide resin. The thermoplastic resin may also be a copolymer of at least two of these resins. These resins are highly heat-resistant and used to provide a highly heat-resistant insulating resin.

The polycarbonate resin of the above resins may include, for example, a polymer including repeating units represented by General formula 1, and the polyarylate resin may include, for example, a polymer including repeating units represented by General formula 2 or General formula 3.

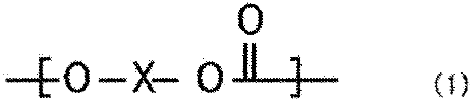

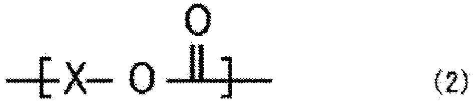

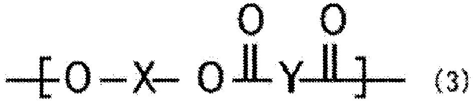

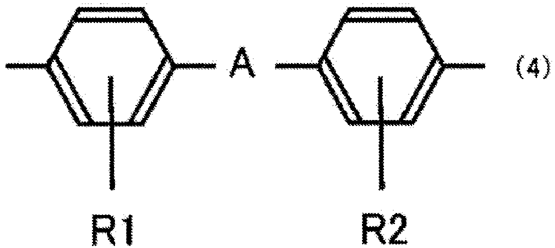

In General formula 1, X is at least one selected from the group consisting of an aliphatic divalent group, a cyclic aliphatic divalent group, and a divalent group represented by General formula 4. In General formula 2 or General formula 3, X is at least one selected from divalent groups represented by General formula 4. In General formula 3, Y is a substituted or unsubstituted arylene group.

In General formula 4, R1 and R2 each independently are a substituted or unsubstituted alkyl group or aryl group, or a halogen atom, and A is a single bond, or a linear, branched, or cyclic alkylene group with 1 to 12 carbon atoms.

Specific examples of X in the above General formulas 1, 2, and 3 include divalent groups represented by General formulas 5a to 5n.

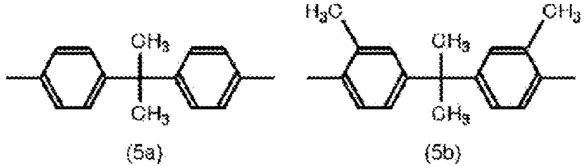

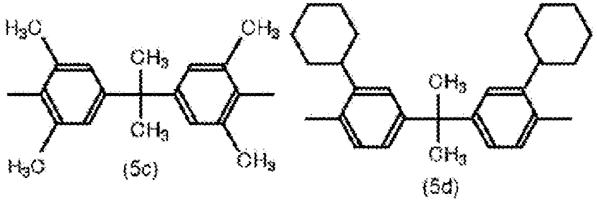

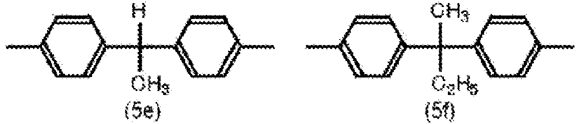

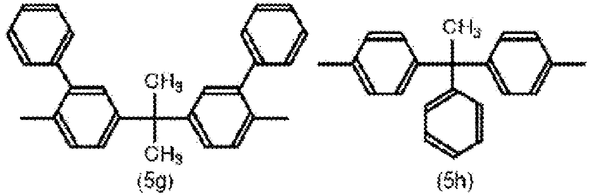

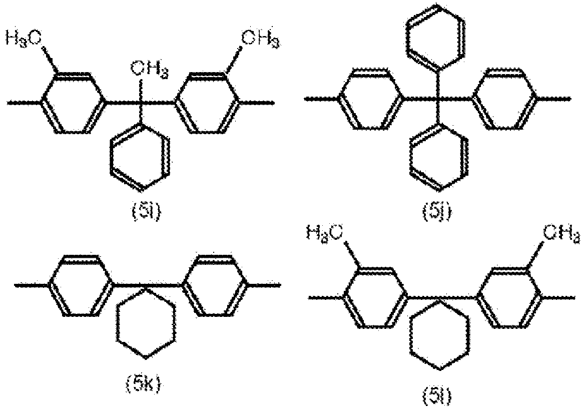

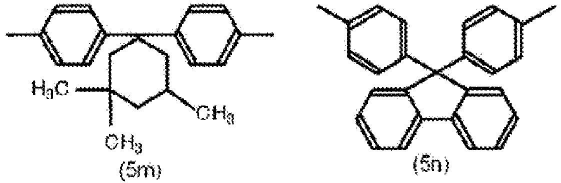

An example of (A) thermoplastic resin may be a cyclic olefinic resin. The cyclic olefinic resin includes, for example, a polymer of norbornene-based monomers shown in General formula 6, for example. The norbornene-based monomer is a type of cyclic olefin monomer, which is a compound including a ring structure of carbon atoms and a carbon-carbon double bond in the ring structure. The cyclic olefin monomer includes a monocyclic cyclic olefin as well as a norbornene-based monomer. The norbornene-based monomer forms a cyclic olefinic organic resin by ring-opening polymerization, vinyl copolymerization, vinyl polymerization, or radical polymerization as shown in the respective Reaction formulas 7 to 10.

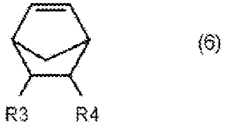

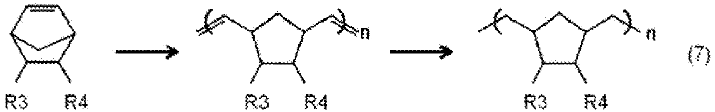

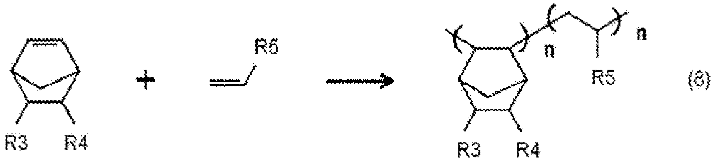

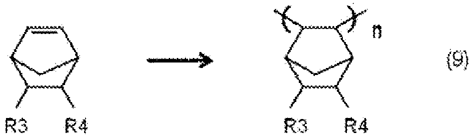

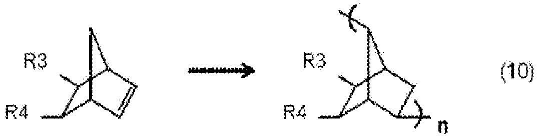

In Formulas 6 to 10, R3, R4, and R5 each are any functional group. The cyclic olefinic resin material is typically a polymer of a single type of norbornene-based monomer, but may also be a polymer of multiple different types of norbornene-based monomers.

Specific examples of norbornene-based monomers include norbornenes, dicyclopentadienes, and tetracyclododecenes. These monomers may contain hydrocarbon groups such as alkyl, alkenyl, alkylidene, and aryl groups or polar groups such as carboxyl and acid anhydride groups as a substituent, but may include nonpolar norbornene-based monomers alone, or more specifically, norbornene-based monomers containing carbon and hydrogen atoms alone.

Nonpolar norbornene-based monomers include nonpolar dicyclopentadienes, nonpolar tetracyclododecenes, nonpolar norbornenes, and nonpolar cyclic olefins with five rings or more.

Norbornene-based monomers may include additional double bonds other than the double bond in the norbornene ring.

More specifically, such cyclic olefinic resin materials commercially available include norbornene-based ring-opening polymers (hereafter simply referred to as ring-opening polymers) such as ARTON (registered trademark) from JSR Corporation and ZEONEX and ZEONOR (registered trademarks) from ZEON Corporation, and norbornene-based vinyl copolymers (hereafter simply referred to as vinyl copolymers) such as APEL and APO (registered trademarks) from Mitsui Chemicals, Inc. and TOPAS (registered trademark) from Polyplastics Co. Ltd. The cyclic olefinic resin materials may also include hydrogenated products of ring-opening polymers of monomers having a norbornene ring, addition polymers of monomers having a norbornene ring and α-olefins, addition polymers of cyclic olefins, hydrogenated products of addition polymers of cyclic olefins, addition polymers of cyclic dienes, and hydrogenated products of addition polymers of cyclic dienes. Of these, ring-opening polymers, or more specifically, ring-opening polymers of monomers having a norbornene ring may particularly facilitate film formation and be highly resistant to chemicals.

### (B) Metal Diketone Complex

The metal diketone complex is a complex including one or more ligands at least including a diketone coordinating to the central metal. Diketones have two ketone groups in a molecule. The two ketone groups create a coordination bond with the central metal.

The metal diketone complex in the present embodiment has the central metal including at least one selected from the group consisting of Mo, V, Zn, Ti, Zr, and Al, for example. As described above, the metal diketone complex is dispersed in the thermoplastic resin, and the central metal traps oxygen to increase the withstand voltage of the insulating resin. In addition to the above metals, the central metal may be Cu, Fe, Ni, Ca, Co, Mn, Mg, Ir, In, Cr or La, for example. An appropriate central metal may be selected in accordance with the use of the insulating resin.

The metal diketone complex in the present embodiment includes any diketone that coordinates to the above central metal. The ligands of the metal diketone complex may contain one or more β-diketones. For example, the diketone may include at least one selected from the group consisting of acetylacetonate (acetylacetone), dibenzoylmethane, ethyl acetoacetate, and diethyl malonate.

The metal diketone complex in the present embodiment may include the same type of diketones or multiple types of diketones coordinating. For example, for the central metal being Zr, four diketones coordinate to form a metal diketone complex. For each of the four ligands being acetylacetonate, the metal diketone complex is Zr acetylacetonate (Formula 11). For multiple types of diketones coordinating, at least one of the acetylacetonate ligands may be substituted by another diketone. For example, one of the four acetylacetonate ligands may be substituted by dibenzoylmethane.

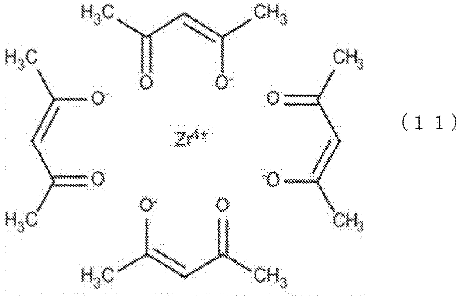

The insulating resin according to the present embodiment has a metal diketone complex content of, for example, 0.5 to 10% by mass.

The insulating resin according to the present embodiment may further be mixed with various components in accordance with, for example, its use and electronic components to include the insulating resin. When, for example, the insulating resin is used as a dielectric film for a film capacitor, the insulating resin may further include, as an additive, at least one of (C) a diketone, an alcohol, or a carboxylic acid. The additive (C) can reduce oxidation of the thermoplastic resin.

### (C) Diketone, Alcohol, or Carboxylic Acid

The dielectric film is obtained by, for example, dissolving a thermoplastic resin and a metal diketone complex in a solvent and forming a film of the resin solution. The metal diketone complex, which is insoluble in solvents that dissolve thermoplastic resins, may not be highly dispersed. Adding a diketone, an alcohol, or a carboxylic acid allows the metal diketone complex to be highly dispersed in the thermoplastic resin. The metal diketone complex highly dispersed in the thermoplastic resin increases the likelihood of oxygen being trapped by the central metal and reduces oxidation of the thermoplastic resin, further increasing the withstand voltage of the dielectric film. Although a dielectric film will now be described as an example application of the insulating resin according to one or more embodiments of the present disclosure, the application is not limited to the dielectric film.

### (C-1) Diketone

The diketone as an additive may be added separately from the above diketone as a ligand of the metal diketone complex. The diketone as an additive may be present as a single compound in the resin solution and in the dielectric film. At least one of the diketone molecules as an additive may form a complex as at least one ligand of the metal diketone complex.

The diketone as an additive may be the same as the above diketone as a ligand. The diketone may be, for example, a β-diketone or a ketoacetate. For example, the β-diketone may be at least one of acetylacetonate (acetylacetone) or dibenzoylmethane. For example, the ketoacetate may be at least one of ethyl acetoacetate or diethyl malonate. The diketone as an additive may be the same compound as or a different compound from the above diketone as a ligand. For example, the metal diketone complex may be Zr acetylacetonate, and the additive may be the same compound, acetylacetone. In another example, the metal diketone complex may be Zr acetylacetonate, and the additive may be a different compound, dibenzoylmethane. When the different compound is used, the diketone as an additive may substitute for at least one of the ligands of the metal diketone complex in the resin solution and in the dielectric film.

The dielectric film in the present embodiment has a diketone content of, for example, 0.05 to 10% by mass.

### (C-2) Alcohol

Using an alcohol as an additive allows the metal diketone complex to be highly dispersed in the thermoplastic resin. The alcohol substitutes for at least one of the ligands of the metal diketone complex in the resin solution. Such an alcohol-substituted metal diketone complex is more soluble in solvents than unsubstituted complexes.

The alcohol as an additive may include, for example, at least one selected from the group consisting of methanol, ethanol, propanol, butanol, hexanol, 2-ethyl hexanol, octanol, nonanol, and decanol. The dielectric film in the present embodiment has an alcohol content of, for example, 0.05 to 10% by mass.

### (C-3) Carboxylic Acid

The carboxylic acid as an additive may include, for example, at least one selected from the group consisting of acetic acid, propionic acid, butyric acid, valeric acid, lauric acid, tridecylic acid, palmitic acid, stearic acid, oleic acid, maleic acid, fumaric acid, succinic acid, citric acid, fumaric acid, lactic acid, tartaric acid, benzoic acid, and phthalic acid. The dielectric film in the present embodiment has an alcohol content of, for example, 0.05 to 10% by mass.

The dielectric film in the present embodiment may be obtained in the manner described below. A thermoplastic resin is dissolved in a solvent, to which a metal diketone complex is added to obtain a resin solution. Other additives may be added as appropriate. The resultant resin solution may be formed into the dielectric film on, for example, a polyethylene terephthalate (PET) substrate. The film may be formed with any known method selected from, for example, doctor blading, die coating, and knife coating.

The dielectric film in the present embodiment has a thickness of, for example, 0.1 to 10 µm. The dielectric film for a film capacitor has a dielectric breakdown field strength of, for example, 550 to 650 V/µm at 125 °C and 650 to 750 V/µm at 25 °C.

Examples of the solvent include ethylene glycol monopropyl ether, methyl ethyl ketone, methyl isobutyl ketone, xylene, propylene glycol monomethyl ether, a propylene glycol monomethyl ether acetate, dimethylacetamide, cyclohexane, ethyl cyclohexane, toluene, chloroform, tetrahydrofuran, and an organic solvent containing a mixture of two or more solvents selected from the above solvents.

The concentration of the thermoplastic resin (resin concentration) in the resin solution is, for example, 1 to 25% by mass. The concentration of the metal diketone complex in the resin solution is, for example, 0.015 to 3% by mass. The concentration of the diketone, alcohol, or carboxylic acid is, for example, 0.005 to 3% by mass.

Although the insulating resin is used as the dielectric film in the above example, the insulating resin has various other applications. For example, the insulating resin may be used as a coating resin for electric wires and cables, a sealing resin for electronic components, insulating paint, or an insulating adhesive. For a coating resin for electric wires and cables, the insulating resin according to one or more embodiments of the present disclosure may be, for example, formed into a strip or a sheet and wrapped around the cable surface. The insulating resin may also be formed into a tube through which a cable is to be placed. For a sealing resin, a coil or a transformer may be fully buried in the insulating resin, for example. Semiconductor devices and electronic components mounted on, for example, wiring boards may be covered with the insulating resin, or the space between connection terminals may be filled with the insulating resin. For insulating paint, the insulating resin may be used as, for example, a resin component of various paints such as solvent-based paint and powder paint, together with other components to be used such as colorants. For an insulating adhesive, the insulating resin may be, for example, dissolved in a solvent to be used as a solvent-based adhesive.

### Examples

The insulating resin according to one or more embodiments of the present disclosure will now be described in detail based on examples. In the examples, the insulating resin was used as dielectric films.

### Examples

A polyarylate was used as the thermoplastic resin, Zr acetylacetonate was used as the metal diketone complex, and acetylacetone was used as the additive. The polyarylate was dissolved in toluene, in which Zr acetylacetonate and acetylacetone were further dissolved to obtain a resin solution with a thermoplastic resin concentration of 12% by mass, a metal diketone complex concentration of 0.36% by mass, and a diketone concentration of 0.18% by mass.

The resin solution was applied onto a PET substrate using a coater and dried at 125 °C for three hours to remove the solvent. This fabricates the dielectric films in examples. A varying amount of the resin solution was applied to obtain dielectric films with a thickness of 2.0 µm (Example 1) and dielectric films with a thickness of 2.7 µm (Example 2).

### Comparative Example

Other than using a resin solution containing neither Zr acetylacetonate nor acetylacetone, the same procedure as for Example 1 was followed to obtain dielectric films in a comparative example.

### Characteristic Assessment

The dielectric breakdown field strength of each dielectric film was measured in the manner described below. The PET film was separated from the dielectric film, and an Al electrode layer with an average thickness of 75 nm was formed on the two surfaces of the dielectric film by vacuum deposition to fabricate a metalized film. The resultant metalized film was subjected to measurement of dielectric breakdown field strength. A direct-current (DC) voltage was applied across the metal films of the metalized film at a voltage increase rate of 10 V per second in an atmosphere at 25 °C or 125 °C, and the dielectric breakdown field strength was determined from the voltage value obtained upon the leakage current value exceeding 1.0 mA. The results are shown in Table 1.

**Table 1**

| | Film length (µm) | Dielectric breakdown field strength (V/µm) | | |
|---|---|---|---|---|
| | | 25 °C | 125 °C | 150 °C |
| Example 1 | 2.0 | 740 | 622 | 481 |
| Example 2 | 2.7 | 680 | 618 | - |
| Comparative example | 2.0 | 608 | 504 | 363 |

The dielectric films in Examples 1 and 2 show higher dielectric breakdown field strength than the dielectric film in the comparative example in both the atmospheres at 25 °C and 125 °C. In an atmosphere at 150 °C, the dielectric film in Example 1 also shows higher dielectric breakdown field strength than the dielectric film in the comparative example.

The present disclosure may be implemented in the following form.

An insulating resin according to one or more embodiments of the present disclosure includes (A) a thermoplastic resin and (B) a metal diketone complex.

The insulating resin according to one or more embodiments of present disclosure has an improved characteristic.

## Claims

1. An insulating resin comprising:
(A) a thermoplastic resin; and
(B) a metal diketone complex.

2. The insulating resin according to claim 1, wherein
(B) the metal diketone complex has a central metal including at least one selected from the group consisting of Mo, V, Zn, Ti, Zr, and Al.

3. The insulating resin according to claim 1 or claim 2, wherein
(B) the metal diketone complex has a ligand including one or more β-diketones.

4. The insulating resin according to claim 3, wherein
(B) the metal diketone complex has a ligand including at least one selected from the group consisting of acetylacetonate, dibenzoylmethane, ethyl acetoacetate, and diethyl malonate.

5. The insulating resin according to any one of claims 1 to 4, further comprising:
at least one of (C) a diketone, an alcohol, or a carboxylic acid.

6. The insulating resin according to claim 5, wherein
(C) the diketone includes either a β-diketone or a ketoacetate.

7. The insulating resin according to claim 6, wherein
the β-diketone includes at least one of acetylacetonate or dibenzoylmethane, and the ketoacetate includes at least one of ethyl acetoacetate or diethyl malonate.

8. The insulating resin according to any one of claims 1 to 7, wherein
(C) the alcohol includes at least one selected from the group consisting of methanol, ethanol, propanol, butanol, hexanol, 2-ethyl hexanol, octanol, nonanol, and decanol.

9. The insulating resin according to any one of claims 1 to 8, wherein
(A) the thermoplastic resin has a glass transition temperature of 50 °C or higher.

10. The insulating resin according to any one of claims 1 to 9, wherein
(A) the thermoplastic resin includes at least one selected from the group consisting of a polycarbonate resin, a polyester resin, a polyarylate resin, a polyphenylene ether resin, a polyphenylene sulfide resin, and a polyetherimide resin.
